# EUROPEAN PATENT APPLICATION

(11) **EP 2 551 749 A1**
(43) Date of publication of application: **30.01.2013**
(21) Application number: 11175412.3
(22) Date of filing: 26.07.2011
(51) Int. Cl.: G06F 3/033

(54) **Optical navigation modules for mobile communication devices**

(71) Applicant: Research in Motion Corporation, Wilmington, DE 19801 (US)
(72) Inventor: Los, Oleg, Rolling Meadows, IL Illinois 60008 (US)
(74) Representative: Bryn-Jacobsen, Caelia

(57) **Abstract**

The disclosure provides a navigation assembly having a compact design that reduces a depth dimension in a z-direction or along a z-axis that is substantially perpendicular to a front face of a mobile communication device. The navigation assembly (500) includes an optical lens (507) unitarily formed with a cover (505), the cover (505) having an upper surface that receives user inputs thereon and a lower surface that receives the optical lens (507). A sensor array (517) is provided in optical communication with the optical lens (507) and a coupling structure (512) is provided to mechanically couple the optical lens (507) and the sensor array (517). The cover (505) overlays a gap formed between the navigation assembly (500) and adjacent keys to prevent contaminants such as liquids, dust, lint, or the like, from entering an interior of the mobile communication device (100). The cover (505) also includes a decorative ring that defines a tracking window and outlines a perimeter of the underlying sensor array (517).

## Description

### FIELD OF THE DISCLOSURE

This disclosure relates generally to mobile communication devices, and more particularly, to mobile communication devices having optical input navigation.

### BACKGROUND

Optical navigation modules are employed in conventional mobile communication devices to navigate a graphical user interface. These conventional navigation modules have various drawbacks including, unsatisfactory depth dimensions, formation of a gap around a perimeter of the navigation module that allows entry of contaminants such as liquids or dust, poor navigation module illumination and misalignment of the navigation module within the receiving aperture. Other drawbacks exist.

### BRIEF DESCRIPTION OF THE DRAWINGS

FIG. 1 is a front view of a mobile communication device having an optical navigation assembly according to one example of the disclosure;

FIG. 2 is a cross-sectional view of the optical navigation assembly according to one example of the disclosure;

FIG. 3 is a top view of a housing for the optical navigation assembly according to one example of the disclosure;

FIG. 4 is a cross-sectional view of the optical navigation assembly according to another example of the disclosure;

FIG. 5 is a cross-sectional view of the optical navigation assembly according to yet another example of the disclosure;

FIG. 6 is a block diagram of a mobile communication device interacting in a communication network according to one example of the disclosure; and

FIG. 7 is an operating environment for a communication system according to one example of the disclosure.

### DETAILED DESCRIPTION

In accordance with an aspect of the disclosure, there are provided optical navigation assemblies for mobile communication devices that provide improved device illumination, incorporate a hardware configuration that reduces space requirements and include a cover that extends beyond an aperture formed in the mobile communication device to receive the optical navigation assembly. In this regard, the cover is configured to extend beyond a perimeter of the aperture and to overlay any gap formed between the optical navigation assembly and any adjacent structures. The cover overlays the gap to prevent contaminants such as liquids, dust, lint, and like particulates, from entering an interior of the mobile communication device.

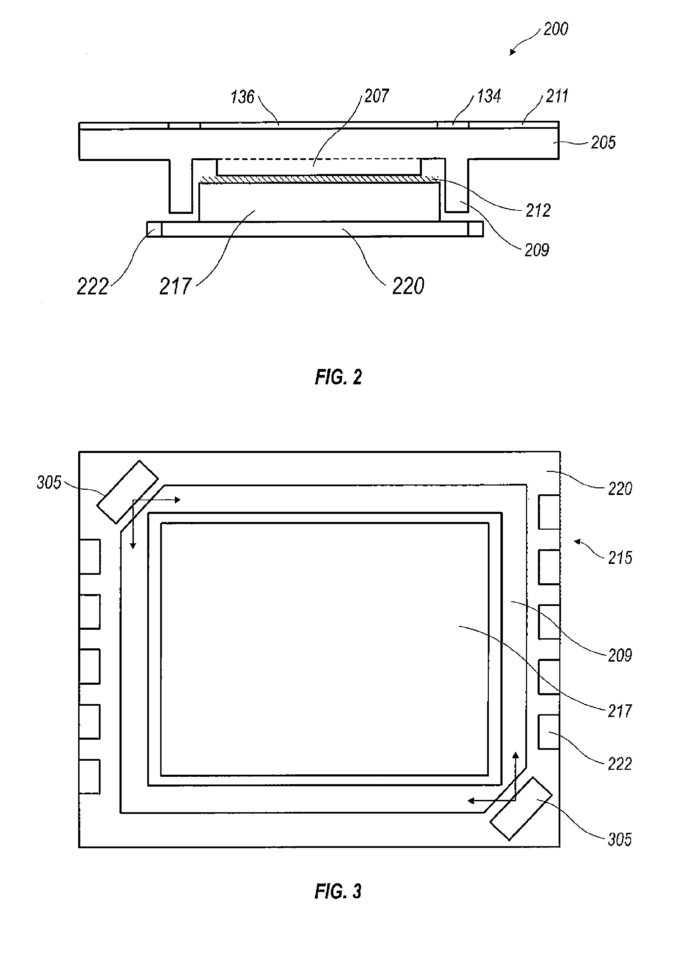

The optical navigation assembly may include a multi-piece structure comprising a housing and a cover as described below with reference to FIGs. 2-5. According to one example, the optical navigation assembly may include optics and a light guide integrated into the cover. According to another example, the optical navigation assembly may include optics and a light guide that are integrated into the housing. In accordance with yet another example, the optical navigation assembly may be configured to integrate the optics into the cover and the light guide into the housing. One of ordinary skill in the art will readily appreciate that other configuration may be used.

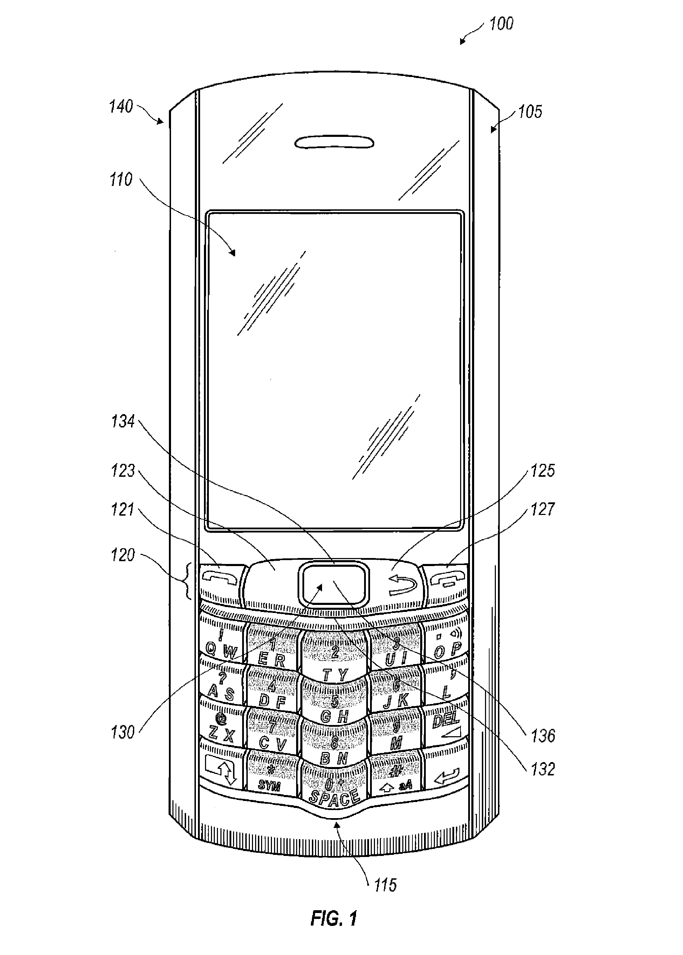

FIG. 1 illustrates a front view of a mobile communication device 100 according to one example. While the illustrated example depicts the mobile communication device 100 as a "smart phone," it will be appreciated by those skilled in the art that the term "mobile communication device" 100 herein may be defined to encompass a personal digital assistant (PDA), a laptop computer, a tablet computer, or any other network access device configured for communicating with a communications network. In accordance with an aspect of the disclosure, the mobile communication device 100 may comprise a housing with a "unibody" structure, also known to those skilled in the art as a "candy-bar" configuration. In alternate examples, the mobile communication device 100 may include a "clamshell" or a "slider" configuration or the like.

In the example, the mobile communication device 100 comprises a front face 105 having a display 110 located above an input user interface, such as a keyboard 115. The keyboard 115 comprises a plurality of keys that are actuable to provide data input via tactile pressure. The mobile communication device 100 further comprises a row of programmable keys 120 configured to perform selected functions as is known in the art. For example, programmable keys 120 may include a call send key 121, a menu key 123, an escape key 125 and a call end key 127, and the like.

According to one example of the disclosure, the mobile communication device 100 may include a navigation assembly 130 that generates signals for navigating through content presented on a graphical user interface, such as the display 110. The navigation assembly 130 is advantageously structured to enable two-dimensional or three-dimensional navigation on the display 110, among enabling other functions. For example, the navigation assembly 130 may include one or more sensor arrays having capacitive, optical or like sensors that are responsive to finger pressure as is well known. The sensor arrays generate signals for instructing cursor movement in substantially any direction relative to the boundaries of the display 110.

The navigation assembly 130 includes a cover 132 that is disposed on the front face 105 of the mobile communication device 100. This location for the assembly allows the navigation assembly 130 to be thumb or finger-actuable, in a manner similar to the keys on the keyboard 115 and the programmable keys 120. The cover 132 may be dimensioned and configured to overlay the navigation assembly 130 and the programmable keys 123, 125, as well as other adjacent structures. The cover 132 may include at least one decorative ring 134 that defines a tracking window 136 and outlines a perimeter of the underlying sensor arrays. As a result, users of the mobile communication device 100 receive a visual indication of the sensing area for the navigation assembly 130.

The cover 132 is formed of a unitary structure using any one of a variety of molding techniques, such as, for example, in mold decoration ("IMD") and in mold labels ("IML"), among others. The IMD and IML processes are versatile and cost effective for decorating and manufacturing durable plastic parts. Additionally, the cover 132 may be fabricated from other materials, including but not limited to: glass or a glass and plastic laminate, among others. The unitary construction prevents contaminants from entering an interior portion of the navigation assembly 130 and the mobile communication device 100 through an interior gap formed between the navigation assembly 130 and the adjacent programmable keys 123, 125. The single-piece construction also facilitates aligning the navigation assembly 130 in substantially a center of the mobile communication device 100 and minimizes tilting of the navigation assembly 130 upon placement in the mobile communication device 100.

The cover 132 may be constructed with sufficient flexibility to enable actuation of selected one of the menu key 123, the escape key 125 and the navigation assembly 130 in response to an applied force thereto. For example, the cover 132 may be constructed to flex in a direction perpendicular to the surface when depressed. The cover 132 is also constructed with sufficient rigidity to provide support for objects that track along the tracking window 136. The navigation assembly 130 may be disposed on the front face 105 of the mobile communication device 100 and positioned in an area between the keyboard 115 and the display 110. In this location, the navigation assembly 130 will not interfere with the keyboard 115 during operation. Furthermore, by utilizing this location for the navigation assembly 130, it advantageously does not block the user's view of the display 110. Of course it will be appreciated by those of ordinary skill in the art that the navigation assembly 130 may be positioned at other locations on the mobile communication device 100.

The mobile communication device 100 optionally includes a reduced QWERTY keyboard 115. Alternatively, the mobile communication device 100 may include other keyboard configurations, including a full size keyboard or a virtual keyboard provided on a touch screen display (not shown). Each key of the keyboard 115 may be associated with at least one alphabetic character, numeral or command, among other data item. The commands may include a space command or a return command, among other commands. The plurality of the keys may include alphabetic characters and may be arranged in a variety of known keyboard layouts, including a QWERTY layout (as shown in Figure 1), a QZERTY layout, a QWERTZ layout, an AZERTY layout, a Dvorak layout, a Russian keyboard layout, a Chinese keyboard layout, or other known layouts to enable data input to the device. These layouts are provided by way of example. Other known layouts are considered to be obvious variations thereof and thus within the scope of this disclosure. The keyboard layout may be selected based on a desired geographical region of operation. Additionally, the keyboard 115 may be interchangeable such that a user may switch between keyboard layouts.

The mobile communication device 100 may include a body 140 sized to facilitate handheld use. The display 110 may be provided on the front face 105 of the body 140 to enable data display and to facilitate sending and receiving communications through a network, including voice and data messages. The mobile communication device 100 may include peripherals, such as a camera or video recorder to enable recording digital images.

FIG. 2 illustrates a cross-sectional view of an optical navigation assembly 200 in accordance with an example of the disclosure. The optical navigation assembly 200 may include a multi-piece structure comprising an upper portion and a lower portion coupled by an adhesive 212. The upper portion includes a cover 205 and an optical lens 207, among other components. The lower portion includes a sensor array 217 and a printed circuit board 220, among other components. The cover 205 comprises integral components, including the optical lens 207 and a light guide 209. The cover 205 may optionally include an upper surface 211 having a decorative finish. Alternatively, the decorative finish may be provided on a lower surface of the cover 205 (not shown). Still further, the decorative finish may be provided on both the upper surface 211 and the lower surface of the cover 205 (not shown). For example, a colored mask finish or other aesthetically desired decorative finish may be provided on one or both of the upper surface 211 and the lower surface of the cover 205.

The upper surface 211 may further comprise a decorative ring 134 defining a tracking window 136 that is dimensioned to outline a perimeter of a sensing area. Alternatively, the decorative ring 134 defining the tracking window 136 may be provided on a lower surface (not shown) of the cover 205. Still further, the decorative ring 134 defining the tracking window 136 may be provided on both the upper surface 211 and the lower surface of the cover 205. The tracking window 136 may define a region of the upper surface 211 or the lower surface that is transparent to passage of light rays. The cover 205 may be dimensioned to extend beyond the decorative ring 134 and may overlay the optical navigation assembly 200 and any adjacent structures, such as adjacent keys.

Light rays that pass through the tracking window 136 may reach an optical lens 207 coupled to the cover 205. The optical lens 207 is positioned to focus the light rays onto the sensor array 217 provided in the housing 215 shown in FIG. 3. The sensor array 217 is configured to convert the received light rays into signals that are routed to a microprocessor (not shown). The microprocessor is electrically coupled to the display 110 and generates signals that perform any of a plurality of functions, including but not limited to, navigating content provided on the display 110.

According to one example of the disclosure, the optical lens 207 may be fabricated unitarily with the cover 205 using a same process that is used to fabricate the cover 205. Alternatively, the optical lens 207 may be fabricated separately from the cover 205 and may be affixed to the cover 205 to form an integrated component. The cover 205 and the optical lens 207 may be assembled using an adhesive or the like.

The optical navigation assembly 200 provides several benefits, including a compact design that reduces a depth dimension of the optical navigation assembly 200 in a z-direction or along a z-axis that is substantially perpendicular to the front face 105 of the mobile communication device 100. This navigation assembly configuration enables fabrication of mobile communication devices with reduced depth dimensions. Additionally, this expedient provides improved image quality compared to conventional navigation assembly assemblies that include at least one layer of air. In other words, the image quality received at the sensor array 217 is improved by eliminating a layer of air between at least one of the cover 205, the optical lens 207 and the sensor array 217. To this end, the cover and optical lens assembly may be affixed to the sensor array 217 using an adhesive 212.

According to one example of the disclosure, the cover 205 further comprises a light guide 209. The light guide 209 may be affixed to the cover 205 in an area below the decorative ring 134. The light guide 209 provides a solid medium for directing light rays and is dimensioned to illuminate at least the decorative ring 134, thereby enabling mobile communication device users to visually locate the sensing area of the tracking window 136. The light guide 209 may be fabricated unitarily with the cover 205 using a same process that is used to fabricate the cover 205. Alternatively, the light guide 209 may be fabricated separately from the cover 205 and may be affixed to the cover 205 to form an integrated component. The cover 205 and the light guide 209 may be affixed using an adhesive or the like.

According to one example of the disclosure, the optical navigation assembly 200 further may comprise a rib or pin (not shown) to actuate a switch (not shown) when the optical navigation assembly 200 is subjected to an actuating force. For example, the rib or pin may be coupled to the cover 205. Alternatively, the optical navigation assembly 200 may be oriented over a switch (not shown) to actuate the switch when the optical navigation assembly 200 is subjected to an actuating force. One of ordinary skill in the art will readily appreciate that other orientations may be provided between the optical navigation assembly 200 and a switch to actuate the switch when the optical navigation assembly is subjected to an actuating force.

FIG. 3 illustrates a top view of a housing 215. According to one example of the disclosure, at least one light emitting diode 305 is provided at the housing 215 to illuminate the light guide 209 coupled to the cover 205. While the light guide 209 is described above as being coupled to the cover 205, FIG. 3 illustrates an outline of the light guide 209 positioned around a perimeter of the sensor array 217 in the housing 215 to visually illustrate an orientation between the pair of light emitting diodes 305 and the corresponding light guide 209. For example, the pair of light emitting diodes 305 may be positioned at opposite corners of the sensor array 217 to enable each light emitting diode 305 to illuminate adjacent sides of the light guide 209. Alternatively, other light sources may be provided to illuminate the light guide 209. For example, a keypad light pipe, a display light source or the like may be used to illuminate the light guide 209. One of ordinary skill in the art will readily appreciate that other orientations may be provided between the light emitting diodes 305 and the light guide 209. One of ordinary skill in the art also will readily appreciate that other light sources may be provided to illuminate the light guide 209.

The light guide 209 guides light rays emitted from the light emitting diodes 305 into the decorative ring 134 provided in the cover 205. The light emitted from the decorative ring 134 may define a boundary of the sensing area associated with the tracking window 136. According to one example of the disclosure, the decorative ring 134 is constructed to minimize an amount of light rays projected from the light emitting diodes 305 into the sensor array 217 so as not to interfere with the operation of the sensor array 217. The housing 215 may include a printed circuit board 220 having solder pads 222 to enable electrical coupling.

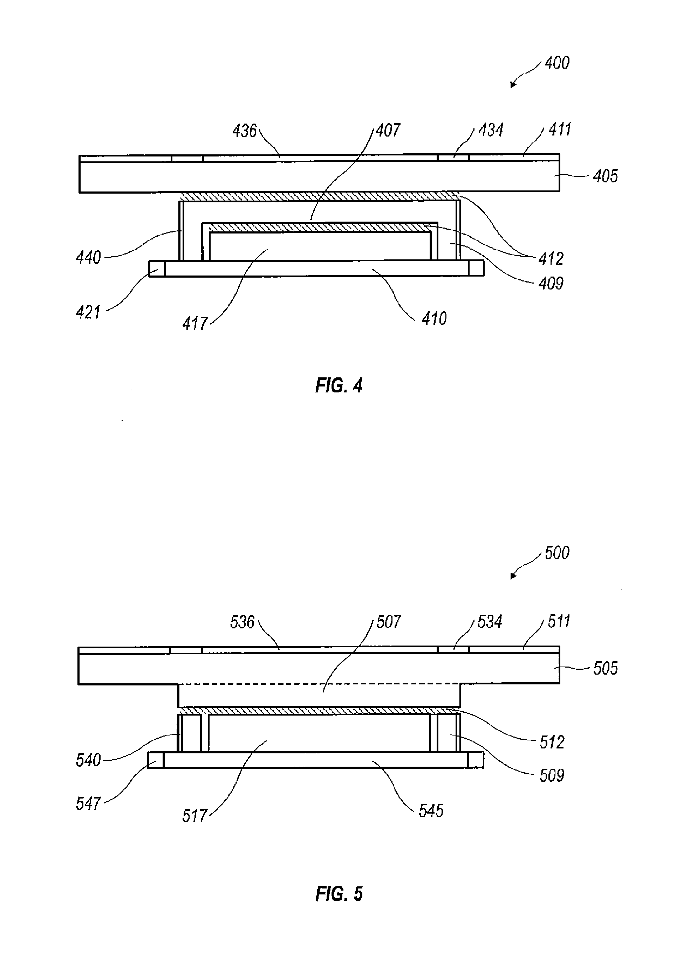

FIG. 4 illustrates a cross-sectional view of an optical navigation assembly 400 in accordance with another example of the disclosure. The optical navigation assembly 400 may include a multi-piece structure comprising an upper portion, a middle portion and a lower portion coupled by an adhesive 412. The upper portion comprises a cover 405, among other components. The middle portion comprises an optical lens 407 and a light guide 409, among other components. The lower portion comprises a sensor array 417, among other components.

The optical lens 407 may be unitarily formed with the light guide 409 to provide an optical lens and the light guide structure that is affixed to both the cover 405 and the sensor array 417. The cover 405 may optionally an upper surface 411 having a decorative finish. Alternatively, the decorative finish may be provided on a lower surface (not shown) of the cover 405. Still further, the decorative finish may be provided on both the upper surface 411 and the lower surface of the cover 205. For example, a colored mask finish or other aesthetically desired decorative finish may be provided on one or both of the upper surface 411 and the lower surface of the cover 405.

The upper surface 411 may further comprise a decorative ring 434 defining a tracking window 436 that is dimensioned to outline a perimeter of a sensing area. Alternatively, the decorative ring 434 defining the tracking window 436 may be provided on a lower surface of the cover 205 (not shown). Still further, the decorative ring 434 defining the tracking window 436 may be provided on both the upper surface 411 and the lower surface of the cover 405 (not shown). The tracking window 436 may define a region of the upper surface 411 or the lower surface that is transparent to passage of light rays. The cover 405 may be configured to extend beyond the decorative ring 434 and may overlay the optical navigation assembly 400 and any adjacent structures, such as adjacent keys.

Light rays that pass through the tracking window 436 may reach the optical lens 407, which is positioned to focus the light rays onto a sensor array 417 provided in the housing. The sensor array 417 is configured to convert the received light rays into signals that are routed to a microprocessor (not shown). The microprocessor is electrically coupled to the display 110, and generates signals that are employed to perform any of a plurality of functions, including but not limited to navigating content provided on the display 110.

According to one example of the disclosure, the light guide 409 may be positioned in an area below the decorative ring 434. The light guide 409 provides a solid medium for directing light rays and is dimensioned to illuminate at least the decorative ring 434, thereby enabling mobile communication device users to visually locate the sensing area of the tracking window 436. A reflector 440 may be provided on an external portion of the light guide 409 to enhance illumination efficiency. The light guide 409 may be fabricated unitarily with the optical lens 407 using a same process that is used to fabricate the optical lens 407. Alternatively, the light guide 409 may be fabricated separately from the optical lens 407 and may be affixed to the optical lens 407 to form an integrated component. The optical lens 407 and the light guide 409 may be affixed using an adhesive or the like. The integral optical lens and the light guide structure may be affixed to the sensor array 417 and the cover 405 using an adhesive 412 or the like.

The optical navigation assembly 400 provides several benefits, including a compact design that reduces a depth dimension of the optical navigation assembly 400 in a z-direction or along a z-axis that is substantially perpendicular to the front face 105 of the mobile communication device 100. This navigation assembly configuration enables fabrication of mobile communication devices with reduced depth dimensions. Additionally, this expedient provides improved image quality compared to conventional navigation assembly assemblies that include at least one layer of air. In other words, the image quality received at the sensor array 417 is improved by eliminating a layer of air between at least one of the cover 405, the optical lens 407 and the sensor array 417. To this end, the cover 405, the optical lens 407 and the sensor array 417 may be affixed using an adhesive 412.

According to one example, the optical navigation assembly 400 may further include a rib or pin (not shown) to actuate a switch (not shown) when the optical navigation assembly 400 is subjected to an actuating force. For example, the rib or pin may be coupled to the cover 405 to actuate the switch (not shown) when the optical navigation assembly 400 is subjected to an actuating force. Alternatively, the optical assembly 400 may be oriented over a switch (not shown) to actuate the switch when the optical navigation assembly 400 is subjected to an actuating force. One of ordinary skill in the art will readily appreciate that other orientations may be provided between the optical navigation assembly 400 and a switch to actuate the switch when the optical navigation assembly is subjected to an actuating force.

Similar to FIG. 3, a housing may include at least one light emitting diode that illuminates the light guide 409 coupled to the sensor array 417 and the cover 405. For example, a pair of light emitting diodes may be positioned at opposite corners of the sensor array 417 to enable each light emitting diode to illuminate adjacent sides of the light guide 409. Alternatively, other light sources may be used to illuminate the light guide 409. For example, a keypad light pipe, a display light source or other light sources may be used to illuminate the light guide 409. One of ordinary skill in the art will readily appreciate that other orientations may be provided between the light emitting diodes and the light guide 409. One of ordinary skill in the art also will readily appreciate that other light sources may be provided to illuminate the light guide 209.

The light guide 409 may be configured to guide light rays emitted from the light emitting diodes into the decorative ring 434 provided in the cover 405. The light emitted from the decorative ring 434 may define a boundary of the sensing area associated with the tracking window 436. According to one example, the decorative ring 434 may be constructed to minimize an amount of light rays projected from the light emitting diodes into the sensor array 417 so as not to interfere with operation of the sensor array 417. The sensor array 417 may be provided on a printed circuit board 410 having solder pads 421 to enable electrical coupling.

FIG. 5 illustrates a cross-sectional view of an optical navigation assembly 500 in accordance with yet another example of the disclosure. The optical navigation assembly 500 may include a multi-piece structure comprising an upper portion and a lower portion coupled by an adhesive 512. The upper portion comprises a cover 505 and an optical lens 507, among other components. The optical lens 507 may be integrated into the cover 505. The lower portion comprises a sensor array 517, among other components. The sensor array 517 may include a light guide 509 affixed thereto. The cover 505 may optionally include an upper surface 511 having a decorative finish. Alternatively, the decorative finish may be provided on a lower surface of the cover 505 (not shown). Still further, the decorative finish may be provided on both the upper surface 511 and the lower surface of the cover 505 (not shown). For example, a colored mask finish or other aesthetically desired decorative finish may be provided on one or both of the upper surface 511 and the lower surface of the cover 505.

The upper surface 511 may further comprise a decorative ring 534 defining a tracking window 536 that is dimensioned to outline a perimeter of a sensing area. Alternatively, the decorative ring 534 defining the tracking window 536 may be provided on a lower surface (not shown) of the cover 505. Still further, the decorative ring 534 defining the tracking window 536 may be provided on both the upper surface 511 and the lower surface of the cover 505. The tracking window 536 may define a region of the upper surface 511 or the lower surface that is transparent to passage of light rays. The cover 505 may be dimensioned to extend beyond the decorative ring 534 and may overlay the optical navigation assembly 500 and any adjacent structures, such as adjacent keys.

Light rays that pass through the tracking window 536 may reach an optical lens 507, which is positioned to focus the light rays onto the sensor array 517 provided in the housing. The sensor array 517 is configured to convert the received light rays into signals that are routed to a microprocessor (not shown). The microprocessor is electrically coupled to the display 110, and generates signals that are employed to perform any of a plurality of functions, including but not limited to navigating content provided on the display 110.

According to one example, the optical lens 507 may be fabricated unitarily with the cover 505 using a same process that is used to fabricate the cover 505. Alternatively, the optical lens 507 may be fabricated separately from the cover 505 and may be affixed to the cover 505 to form an integrated component. The cover 505 and the optical lens 507 may be assembled using an adhesive or the like

The optical navigation assembly 500 provides several benefits, including a compact design that reduces a depth dimension of the optical navigation assembly 500 in a z-direction or along a z-axis that is substantially perpendicular to the front face 105 of the mobile communication device 100. This navigation assembly configuration enables fabrication of mobile communication devices with reduced depth dimensions. Additionally, this expedient provides improved image quality compared to conventional navigation assembly assemblies that include at least one layer of air. In other words, image quality received at the sensor array 517 is improved by eliminating a layer of air between at least one of the cover 505, the optical lens 507 and the sensor array 517. To this end, the optical lens 507 and the sensor array 517 may be affixed using the adhesive 512.

According to one example, the housing may include a light guide 509. The light guide 509 may be affixed to the sensor array 517 and may be aligned to illuminate an area below the decorative ring 534. The light guide 509 provides a solid medium for directing light rays and is dimensioned to illuminate at least the decorative ring 534, thereby enabling mobile communication device users to visually locate the sensing area of the tracking window 536. A reflector 540 may be provided on an external portion of the light guide 509 to enhance illumination efficiency. The light guide 509 may be fabricated separately and affixed to the sensor array 517 using an adhesive or the like.

According to one example, the optical navigation assembly 500 may further include a rib or pin (not shown) to actuate a switch (not shown) when the optical navigation assembly is subjected to an actuation force. For example, the rib or pin may be coupled to the cover 505 to actuate the switch (not shown) when the optical navigation assembly is subjected to an actuating force. Alternatively, the optical assembly 500 may be oriented over a switch (not shown) to actuate the switch when the optical navigation assembly 500 is subjected to an actuating force. One of ordinary skill in the art will readily appreciate that other orientations may be provided between the optical navigation assembly 500 and a switch to enable actuation of the switch when the optical navigation assembly is subjected to a force.

Similar to FIG. 3, the housing may include at least one light emitting diode that illuminates the light guide 509 coupled to the sensor array 517. For example, a pair of light emitting diodes may be positioned at opposite corners of the sensor array 517 to enable each light emitting diode to illuminate adjacent sides of the light guide 509. Alternatively, other light sources may be used to illuminate the light guide 509. For example, a keypad light pipe, a display light source or other light sources may be used to illuminate the light guide 509. One of ordinary skill in the art will readily appreciate that other orientations may be provided between the light emitting diodes and the light guide 509. One of ordinary skill in the art also will readily appreciate that other light sources may be provided to illuminate the light guide 509.

The light guide 509 may be configured to guide light rays emitted from the light emitting diodes into the decorative ring 534 provided in the cover 505. The light emitted from the decorative ring 534 may define a boundary of the sensing area associated with the tracking window 536. According to one example, the decorative ring 534 may be constructed to minimize an amount of light rays projected from the light emitting diodes into the sensor array 517 so as not to interfere with operation of the sensor array 517. The sensor array 517 may be provided on a printed circuit board 545 having solder pads 547 to enable electrical coupling.

While the foregoing examples describe the navigation assembly as operating in an mobile communication device environment, one of ordinary skill in the art will readily appreciate that the disclosure may be operated in other environments. For example, the navigation assembly may be provided in other interface devices, such as a navigation mouse. The navigation assembly may be placed in one or more mouse buttons to track user finger movement and to obtain biometric information, among performing other functions.

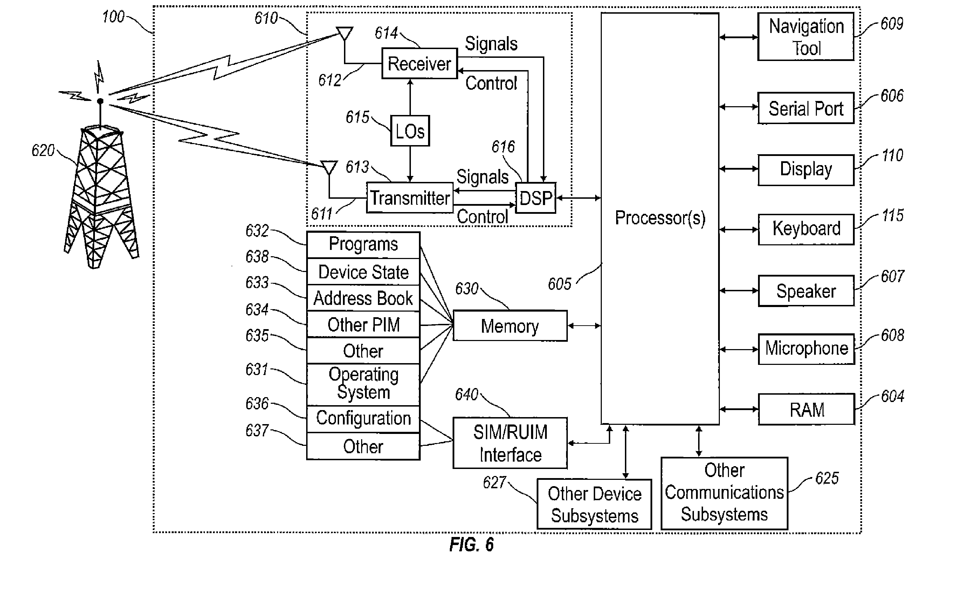

FIG. 6 illustrates a block diagram of the mobile communication device 100 in a communication network in accordance with an exemplary implementation. One of ordinary skill in the art will readily appreciate that additional elements and modifications may be necessary to make the mobile communication device 100 work in particular network environments.

The mobile communication device 100 generally comprises a microprocessor 605 and a communication subsystem 610 for communicating with a wireless network 620. The microprocessor 605 may be coupled to a serial port (for example, a Universal Serial Bus port) 606 that facilitates communication with other devices or systems via the serial port 606. A display 110 may be communicatively coupled to the microprocessor 605 to facilitate display of information to an operator of the mobile communication device 100. If the mobile communication device 100 is equipped with a keyboard 115 -- which can be physical or virtual (for example, displayed as images of keys rendered on a touch screen) -- the keyboard 115 provides a user interface for generating external commands/controls to the microprocessor 605. The mobile communication device 100 may comprise one or more speakers 607, and one or more microphones 608, which are connected to the microprocessor 605 in a conventional manner. Other communication subsystems 625 and other mobile communication device subsystems 627 communicate with the microprocessor 605. An example of a communication subsystem 625 is a short-range communication system such as a BLUETOOTH^{Ⓡ} communication module or a WI-FI^{®} communication module (a communication module in compliance with IEEE 802.11b, g or n) and associated circuits and components. Additionally, the microprocessor 605 may perform operating system functions and may execute programs or software applications on the mobile communication device 100. In some implementations, not all of the above components are included in the mobile communication device 100. An auxiliary I/O subsystem may include one or more different navigation tools (multi-directional or single-directional) 609, external I/O devices such as keyboards, and other subsystems capable of providing input or receiving output from the mobile communication device 100.

The auxiliary I/O subsystem may take the form of a variety of different navigation tools 609 (multi-directional or single-directional) such as an optical navigation assembly or tool as illustrated in the example shown in FIG. 1 and shown in more detail in Figures 2-5. In other examples, auxiliary I/O subsystem may include a trackball, a thumbwheel, a navigation pad, a joystick, a touch-sensitive interface, or other I/O interface. The navigation tool 609 may be located on a front face 105 of the mobile communication device 100 or may be located on any exterior surface of the mobile communication device 100. Other auxiliary I/O subsystems may include external display devices and externally connected keyboards (not shown). While the above examples have been provided in relation to the auxiliary I/O subsystem, other subsystems capable of providing input or receiving output from the mobile communication device 100 are considered within the scope of this disclosure. Additionally, other keys may be placed along the side of the mobile communication device 100 to perform selected functions and may include escape keys, volume control keys, scrolling keys, power switches, or user programmable keys, and may likewise be programmed accordingly.

The mobile communication device 100 may be equipped with components to enable operation of various programs. A memory 630 may provide storage for the operating system 631, device programs 632, device state data 638, and so forth. The operating system 631 may be generally configured to manage other programs 632 that may be stored in the memory 630 and may be executable on the processor 605. The operating system 631 may handle requests for services made by programs 632 through predefined program interfaces. More specifically, the operating system 631 may typically determine an order in which the programs 632 are executed on the processor 605. The operating system 631 may determine an execution time allotted for each program 632, may manage sharing of the memory 630 among the programs 632, may handle input and output to and from other device subsystems 627, and so forth. In addition, users may interact directly with the operating system 631 through a user interface, typically including the keyboard 115 and the display 110. The operating system 631, programs 632, data, and other information may be stored in the memory 630, such as RAM 604, read-only memory (ROM), or another suitable storage element (not shown). An address book 633, a personal information manager (PIM) 634, and other information 635 may also be stored.

The mobile communication device 100 may be enabled for two-way communication within voice, data, or voice and data communication systems. A Subscriber Identity Module (SIM) or Removable User Identity Module (RUIM) may be utilized to authorize communication with the communication network 620. A SIM/RUIM interface 640 provided within the mobile communication device 100 may interface a SIM/RUIM card (not shown) to the microprocessor 605 and may facilitate removal or insertion of a SIM/RUIM card. The SIM/RUIM card may include a memory and may hold key configurations 636 and other information 637, such as identification and subscriber related information. The mobile communication device 100 may be equipped with an antenna 611 for transmitting signals to the communication network 620 and another antenna 612 for receiving communication from the communication network 620. Alternatively, a single antenna (not shown) may be utilized to both transmit and receive signals. The communication subsystem 610 may include a transmitter 613 and receiver 614, one or more antennae 611, 612, local oscillators (LOs) 615 and a processing module 616, such as a digital signal processor (DSP).

The mobile communication device 100 may include a touch-sensitive display or touch screen that includes one or more touch location sensors, an overlay, and a display 110, such as a liquid crystal display (LCD) or light emitting diode (LED) display. The touch location sensor(s) may be a capacitive, resistive, infrared, surface acoustic wave (SAW), or other type of touch-sensitive sensor and can be integrated into the overlay. The overlay, or cover, can be comprised of laminated glass, plastic, or other suitable material(s) and is advantageously translucent or transparent. A touch, or touch contact, can be detected by the touch screen and processed by the processor 605, for example, to determine a location of the touch. Touch location data may include a center of the area of contact or the entire area of contact for further processing. A touch may be detected from a contact member, such as a body part of a user, for example a finger or thumb, or other objects, for example a stylus, pen, or other pointer, depending on the nature of the touch location sensor.

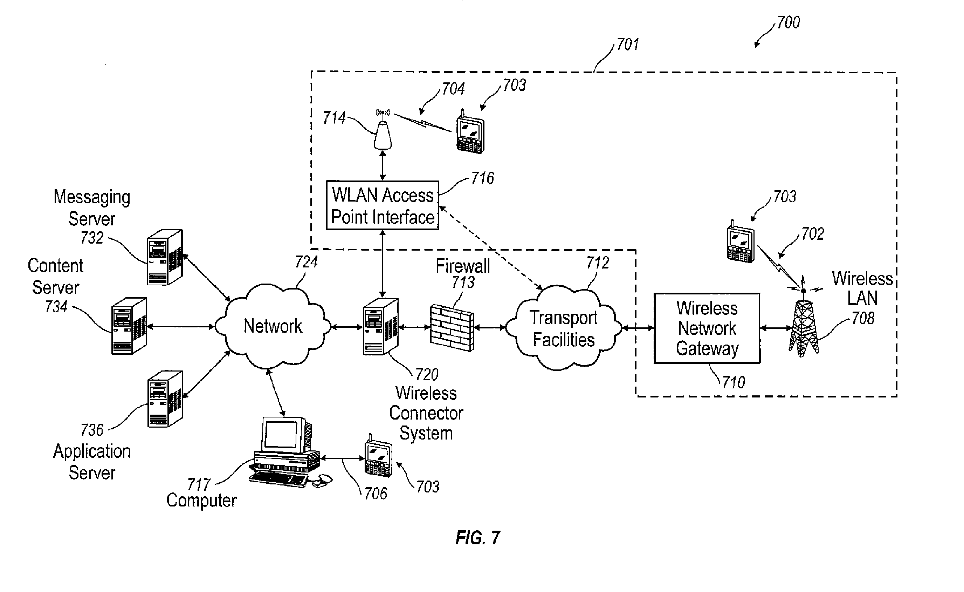

FIG. 7 illustrates an example of an operating environment for a communication system 700 that may include a number of modular communication devices 703, including mobile communication devices. The communication system 700 may be coupled to the modular communication devices 703 in any of several different ways. The modular communication devices 703 may be coupled to a wireless network 701, such as one or more of a Wireless Wide Area Network (WWAN) 702 and a Wireless Local Area Network (WLAN) 704, among other suitable network arrangements. In some examples, the modular communication devices 703 may be configured to communicate over both the WWAN 702 and WLAN 704, and to roam between these networks. In some examples, the wireless network 701 may comprise multiple WWANs 702 and WLANs 704, among other configurations.

The WWAN 702 may be implemented as any suitable wireless access network technology. By way of example, but not limitation, the WWAN 702 may be implemented as a wireless network that includes a number of transceiver base stations 708 (one of which is shown in FIG. 7), where each of the base stations 708 provide wireless Radio Frequency (RF) coverage to a corresponding area or cell. The WWAN 702 typically is operated by a mobile network service provider that provides subscription packages to users of the modular communication devices 703. In some examples, the WWAN 702 may conform to one or more of the following wireless network types: Mobitex Radio Network; DataTAC; GSM (Global System for Mobile Communication); GPRS (General Packet Radio System); TDMA (Time Division Multiple Access); CDMA (Code Division Multiple Access); CDPD (Cellular Digital Packet Data); iDEN (integrated Digital Enhanced Network); Ev-DO (Evolution-Data Optimized); CDMA2000; EDGE (Enhanced Data rates for GSM Evolution); UMTS (Universal Mobile Telecommunication Systems); HSPDA (High-Speed Downlink Packet Access); IEEE 802.16e (also referred to as Worldwide Interoperability for Microwave Access or "WiMAX"), or various other networks. While WWAN 702 is described herein as a "Wide-Area" network, that term is intended also to incorporate wireless Metropolitan Area Networks (WMAN) or other similar technologies for providing coordinated service wirelessly over an area larger than that covered by typical WLANs.

The WWAN 702 may communicate with a wireless network gateway 710 that couples the modular communication devices 703 to transport facilities 712. The transport facilities 712 couple the modular communication devices 703 to a wireless connector system 720. The transport facilities 712 may include one or more private networks or lines, the Internet, a virtual private network, or any other suitable network, among other transport facilities. The wireless connector system 720 may be operated, for example, by an organization or enterprise such as a corporation, university, or governmental department, among other organizations or enterprises, which allow access to a network 724, such as an internal or enterprise network (e.g., an intranet) and its resources. Alternatively, the wireless connector system 720 may be operated by a mobile network provider. In some examples, the network 724 may be realized using the Internet rather than, or in addition to, an internal or enterprise network.

The wireless network gateway 710 provides an interface between the wireless connector system 720 and the WWAN 702. The wireless network gateway 710 facilitates communication between the modular communication devices 703 and other devices (not shown) that may be connected, directly or indirectly, to the WWAN 702. Accordingly, communications sent via the modular communication devices 703 are transported via the WWAN 702, the wireless network gateway 710 and the transport facilities 712 to the wireless connector system 720. Communications sent from the wireless connector system 720 are received by the wireless network gateway 710 and transported via the WWAN 702 to the modular communication devices 703.

According to one example, the WLAN 704 includes a wireless network that conforms to IEEE 802.11x standards (sometimes referred to as Wi-Fi TM) such as, for example, the IEEE 802.11a, 802.11b and/or 802.11g standard. One of ordinary skill in the art will readily appreciate that other communication protocols may be used for the WLAN 704, such as, IEEE 802.11n, IEEE 802.16e (also referred to as Worldwide Interoperability for Microwave Access or "WiMAX"), or IEEE 802.20 (also referred to as Mobile Wireless Broadband Access), among other communication protocols. The WLAN 704 includes one or more wireless RF Access Points (AP) 714 (one of which is shown in FIG. 7) that collectively provide a WLAN coverage area.

The WLAN 704 may be a user's personal network, an enterprise network, or a hotspot offered by an Internet service provider (ISP), a mobile network provider, or a property owner in a public or semi-public area, for example. The access points 714 may be connected to an access point (AP) interface 716 that may connect to the wireless connector system 720 directly or indirectly. A direct connection may be provided when the access point 714 is part of an enterprise WLAN 704 in which the wireless connector system 720 resides. An indirect connection may be provided via the transport facilities 712, as indicated by the dashed signal line in FIG. 7, if the access point 714 is a personal Wi-Fi network or Wi-Fi hotspot. In this case, a mechanism, such as a virtual private network (VPN), may be used for securely connecting to the wireless connector system 720. The AP interface 716 may provide translation and routing services between the access points 714 and the wireless connector system 720 to facilitate communication, directly or indirectly, with the wireless connector system 720.

The wireless connector system 720 may be implemented as one or more servers, and is typically located behind a firewall 713. The wireless connector system 720 manages communications, including email, Hypertext Transfer Protocol (HTTP), and HTTP Secure (HTTPS) communications to and from a set of managed modular communication devices 703. The wireless connector system 720 also provides administrative control and management capabilities over users and modular communication devices 703 that may connect to the wireless connector system 720.

The wireless connector system 720 allows the modular communication devices 703 to access the network 724 and connected resources and services such as a messaging server 732, for example, a Microsoft Exchange ServerⓇ, IBM Lotus DominoⓇ, or Novell GroupWise™ email server; a content server 734 for providing content, such as Internet content or content from an organization's internal servers; application servers 736 for implementing server-based applications, such as instant messaging (IM) applications to modular communication devices 703, and intranet file services; among other connected resources and services.

The wireless connector system 720 typically provides a secure exchange of data (e.g., email messages, personal information manager (PIM) data, and IM data) with the modular communication devices 703. In some examples, communications between the wireless connector system 720 and the modular communication devices 703 may be encrypted. In some examples, communications are encrypted using a symmetric encryption key implemented using Advanced Encryption Standard (AES) or Triple Data Encryption Standard (Triple DES) encryption. Private encryption keys are generated in a secure, two-way authenticated environment and are used for both encryption and decryption of data. In some examples, the private encryption key is stored only in the user's mailbox on the messaging server 732 and on the modular communication device 703, and can typically be regenerated by the user on modular communication devices 703. Data sent to the modular communication devices 703 is encrypted by the wireless connector system 720 using the private encryption key retrieved from the user's mailbox. The encrypted data, when received on the modular communication devices 703, is decrypted using the private encryption key stored in memory. Similarly, data sent to the wireless connector system 720 from the modular communication devices 703 is encrypted using the private encryption key stored in the memory of the modular communication device 703. The encrypted data, when received on the wireless connector system 720, is decrypted using the private encryption key retrieved from the user's mailbox.

The wireless network gateway 710 is adapted to send data packets received from the modular communication device 703 over the WWAN 702 to the wireless connector system 720. The wireless connector system 720 then sends the data packets to the appropriate connection point such as the messaging server 732 or the content servers 734 or the application server 736, or a combination of these. Conversely, the wireless connector system 720 may send data packets received, for example, from the messaging server 732 or the content servers 734 or the application servers 736 or any combination of these, to the wireless network gateway 710 that then transmit the data packets to the destination modular communication device 703. The AP interfaces 716 of the WLAN 704 provide similar sending functions between the modular communication device 703, the wireless connector system 720 and network connection point, such as the messaging server 732, the content server 734, the application server 736, or any combination of these.

The network 724 may comprise a private local area network (LAN), metropolitan area network (MAN), wide area network (WAN), the public Internet or combinations thereof. The network 724 may include virtual networks constructed using any of these networks, alone or in combination. Alternatively, the modular communication device 703 may connect to the wireless connector system 720 using a computer 717, such as a desktop or a notebook computer, via the network 724. A link 706 may be provided between the modular communication device 703 and the computer 717 for exchanging information between the modular communication device 703 and a computer 717 connected to the wireless connector system 720. The link 706 may include one or both of a physical interface or a short-range wireless communication interface.

The physical interface may comprise one or a combination of an Ethernet connection, a Universal Serial Bus (USB) connection, a Firewire™ (also known as an IEEE 1394 interface) connection, or other serial data connections, via respective ports or interfaces of the modular communication device 703 and computer 717. The short-range wireless communication interface may be a personal area network (PAN) interface. The PAN interface is a wireless point-to-point connection implemented to connect the end points without physical cables. The short-range wireless communication interface may include one or a combination of: an infrared (IR) connection, such as an Infrared Data Association (IrDA) connection; a radio frequency (RF) connection, such as a BluetoothⓇ or IEEE 802.15.1 connection, UltraWideband (UWB) or IEEE 802.15.3a connection, or ZigBee or IEEE 802.15.4 connection; among other communication interfaces.

It will be appreciated that the above-described communication system 700 is provided for illustration purposes only. The above-described communication system 700 may be implemented using any of a multitude of network configurations for use with the modular communication devices 703. Suitable variations of the communication system 700 will be readily appreciated by a person of ordinary skill in the art and are intended to fall within the scope of the present disclosure.

The disclosure may be implemented using hardware or software in association with hardware. In some examples, the software may include firmware, resident software, microcode, a Field Programmable Gate Array (FPGA) or Application-Specific Integrated Circuit (ASIC), etc. In particular, for real-time or near real-time use, an FPGA or ASIC implementation is desirable.

Furthermore, the disclosure may take the form of a computer program product that includes program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD. Both processors and program code for implementing each as aspect of the disclosure can be centralized or distributed (or a combination thereof) as known to those skilled in the art.

A data processing system suitable for storing a computer program product of the disclosure and for executing the program code of the computer program product will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters can also be coupled to the system to enable the data processing system to become coupled to other data processing systems or remote printers or storage devices through intervening private or public networks. Modems, cable modem and Ethernet cards are just a few of the currently available types of network adapters. Such systems can be centralized or distributed, e.g., in peer-to-peer and client/server configurations. In some examples, the data processing system is implemented using one or both of FPGAs and ASICs.

## Claims

1. An optical navigation assembly (500) for navigating a graphical user interface in at least one direction, the optical navigation assembly (500) comprising:
an optical lens (507) that is unitarily formed with a cover (505), the cover (505) having an upper surface that receives user inputs thereon and a lower surface that receives the optical lens (507);
a sensor array (517) in optical communication with the optical lens (507); and
a coupling structure (512) that mechanically couples the optical lens (507) and the sensor array (517).

2. The optical navigation assembly (500) according to Claim 1, further comprising:
a light source (305) that generates light rays; and
a light guide (509) that is mechanically coupled to one of the optical lens (507) or the cover (505), the light guide (509) being optically coupled to the light source (305) and providing a solid medium for directing the light rays onto the cover (505).

3. The optical navigation assembly (500) according to Claim 2, wherein the light guide (509) is unitarily formed on one of the optical lens (507) or the cover (505).

4. An optical navigation assembly (400) for navigating a graphical user interface in at least one direction, the optical navigation assembly comprising:
a cover (405) having an upper surface that receives user inputs thereon;
an optical lens (407) that is unitarily formed with a light guide (409); and
a sensor array (417) that is mechanically coupled to the optical lens (407), the sensor array (417) being in optical communication with the optical lens (407); and
a coupling structure (412) that mechanically couples the optical lens (407), the sensor array (417) and the cover (405).

5. The optical navigation assembly (400) according to Claim 4, further comprising:
a light source (305) that generates light rays, the light source (305) being optically coupled to the light guide (409), the light guide (409) having a solid medium for directing the light rays into the cover (405).

6. The optical navigation assembly (200,400,500) according to Claims 1 and 4, wherein the coupling structure (212,412,512) includes optically clear adhesive.

7. The optical navigation assembly (200,400,500) according to Claims 1 and 4, further comprising a light ring (234,434,534) provided on the upper surface of the cover (205,405,505), the light ring (234,434,534) being in optical communication with the light guide (209,409,509).

8. The optical navigation assembly (200,400,500) according to Claims 1 and 4, wherein the cover (205,405,505) includes a unitary structure dimensioned to extend over a gap formed between the optical navigation assembly (200,400,500) and an adjacent key.

9. The optical navigation assembly (200,400,500) according to Claim 8, wherein the cover (205,405,505) includes sufficient flexibility to enable actuation of the optical navigation assembly (200,400,500) and the adjacent key.

10. The optical navigation assembly (200,400,500) according to Claim 9, wherein the cover (205,405,505) is constructed to flex in a direction perpendicular to a plane defined by the upper surface of the cover (205,405,505).

11. The optical navigation assembly (200,400,500) according to Claim 8, wherein the cover (205,405,505) is fabricated of glass or glass and plastic laminate.

12. The optical navigation assembly (200,400,500) according to Claim 8, further comprising a printed circuit board (220,410,545) for electrically coupling the optical navigation assembly (200,400,500) to an external component.

13. The optical navigation assembly (200,400,500) according to Claim 12, wherein the printed circuit board (220,410,545) provides signals for navigating a graphical user interface.

14. The optical navigation assembly (200,400,500) according to Claim 10, further comprising a rib that actuates a switch upon flexing the optical navigation assembly (200,400,500) in the direction perpendicular to a plane defined by the upper surface of the cover (205,405,505).

15. The optical navigation assembly (200,400,500) according to Claim 10, further comprising a printed circuit board (220,410,545) for electrically coupling the optical navigation assembly (200,400,500) to an external component, the printed circuit board (220,410,545) being configured to actuate a switch upon flexing the optical navigation assembly (200,400,500) in the direction perpendicular to a plane defined by the upper surface of the cover (205,405,505).

## Amended claims

### Amended claims in accordance with Rule 137(2) EPC.

**1.** An optical navigation assembly (500) arranged for navigating a graphical user interface in at least one direction, the optical navigation assembly (500) comprising:
an optical lens (507) that is unitarily formed with a cover (505), the cover (505) having an upper surface that receives user inputs thereon and a lower surface that receives the optical lens (507);
a sensor array (517) in optical communication with the optical lens (507); and
a coupling structure (512) that mechanically couples the optical lens (507) and the sensor array (517).

**2.** The optical navigation assembly (500) according to Claim 1, further comprising:
a light source (305) that generates light rays; and
a light guide (509) that is mechanically coupled to one of the optical lens (507) or the cover (505), the light guide (509) being optically coupled to the light source (305) and providing a solid medium for directing the light rays onto the cover (505).

**3.** The optical navigation assembly (500) according to Claim 2, wherein the light guide (509) is unitarily formed on one of the optical lens (507) or the cover (505).

**4.** An optical navigation assembly (400) according to claim 1 further comprising:
a cover (405) having an upper surface that receives user inputs thereon;
wherein the optical lens (407) is unitarily formed with a light guide (409); and ; and
the coupling structure (412) mechanically couples the optical lens (407), the sensor array (417) and the cover (405).

**5.** The optical navigation assembly (400) according to Claim 4, further comprising:
a light source (305) that generates light rays, the light source (305) being optically coupled to the light guide (409), the light guide (409) having a solid medium for directing the light rays into the cover (405).

**6.** The optical navigation assembly (200,400,500) according to Claims 1 and 4, wherein the coupling structure (212,412,512) includes optically clear adhesive.

**7.** The optical navigation assembly (200,400,500) according to Claims 1 and 4, further comprising a light ring (234,434,534) provided on the upper surface of the cover (205,405,505), the light ring (234,434,534) being in optical communication with the light guide (209,409,509).

**8.** The optical navigation assembly (200,400,500) according to Claims 1 and 4, wherein the cover (205,405,505) includes a unitary structure dimensioned to extend over a gap formed between the optical navigation assembly (200,400,500) and an adjacent key.

**9.** The optical navigation assembly (200,400,500) according to Claim 8, wherein the cover (205,405,505) includes sufficient flexibility to enable actuation of the optical navigation assembly (200,400,500) and the adjacent key.

**10.** The optical navigation assembly (200,400,500) according to Claim 9, wherein the cover (205,405,505) is constructed to flex in a direction perpendicular to a plane defined by the upper surface of the cover (205,405,505).

**11.** The optical navigation assembly (200,400,500) according to Claim 8, wherein the cover (205,405,505) is fabricated of glass or glass and plastic laminate.

**12.** The optical navigation assembly (200,400,500) according to Claim 8, further comprising a printed circuit board (220,410,545) for electrically coupling the optical navigation assembly (200,400,500) to an external component.

**13.** The optical navigation assembly (200,400,500) according to Claim 12, wherein the printed circuit board (220,410,545) provides signals for navigating a graphical user interface.

**14.** The optical navigation assembly (200,400,500) according to Claim 10, further comprising a rib that actuates a switch upon flexing the optical navigation assembly (200,400,500) in the direction perpendicular to a plane defined by the upper surface of the cover (205,405,505).

**15.** The optical navigation assembly (200,400,500) according to Claim 10, further comprising a printed circuit board (220,410,545) for electrically coupling the optical navigation assembly (200,400,500) to an external component, the printed circuit board (220,410,545) being configured to actuate a switch upon flexing the optical navigation assembly (200,400,500) in the direction perpendicular to a plane defined by the upper surface of the cover (205,405,505).
